# EUROPEAN PATENT APPLICATION

(11) **EP 3 522 321 A1**
(43) Date of publication of application: **07.08.2019**
(21) Application number: 19154926.0
(22) Date of filing: 31.01.2019
(51) Int. Cl.: H02H 7/08, H02P 27/06, B25F 5/00

(54) **POWER TOOLS WITH A MANUAL BACKUP SWITCH AND ITS OPERATING METHOD**

(30) Priority: 02.02.2018 CN 201810107487
(71) Applicant: TTI (Macao Commercial Offshore) Limited, Macao (MO)
(72) Inventor: Li, Yong Min, Dongguan City (CN); Xie, Li Hua, Dongguan City (CN)
(74) Representative: Williams, Annabel

(57) **Abstract**

A power tool including a power supply, a motor, a microcontroller; a motor controller and a switch module. The motor is adapted to be powered by the power source. The motor controller is connected to the motor; and the motor controller is connected to and controlled by the microcontroller to control operation of the motor. The switch module is connected between the power source and the motor and is adapted to be operated by a user to electronically cut off an electrical connection between the power source and the motor. The switch module is configured to operate independently of the motor controller and the microprocessor. In this way, even if the software of the microprocessor itself fails under certain abnormal conditions, or the motor controller fails, the main circuit can still be cut off by the user through the user switch to ensure safety.

## Description

### FIELD OF INVENTION

The invention relates to a power tool, in particular to a control mechanism for the on/off of a power supply to a motor in a power tool.

### BACKGROUND

With the increasing popularity and wide applications of power tools, more and more users are beginning to use the power tools, and working current of the power tools are also increasing. In some existing designs, controlling the on/off of current of the motor of the power tool is achieved through a simple mechanical switch. However, in the case of large current, mechanical switches are gradually becoming inappropriate owing to their problems in terms of service life, heat safety, cost, and the like. For example, the insulating capacity, current capacity, and the like of the mechanical switch need to be designed to be high, so as to accommodate the flowing of a large current.

In some of the newer power tool designs, the same function as the mechanical switches can be achieved by signal switches. Such signal switches typically use a microprocessor to effect control on the motor, such as by a motor controller. However, according to many national safety regulations, the power tool equipped with such signal switches must ensure that the disconnection of the main circuit in the event of a microprocessor failure could still be achieved by the user, in order to ensure safety.

### SUMMARY

Therefore, embodiments of the invention provide switch modules suitable for a power tool that can electronically cut off the power supply to a motor in the power tool irrespective of the state of the microprocessor and the motor controller.

In a first aspect of the invention, a power tool is provided which contains: a power supply, a motor, a microcontroller; a motor controller and a switch module. The motor is adapted to be powered by the power source. The motor controller is connected to the motor, and the motor controller is connected to and controlled by the microcontroller to control operation of the motor. The switch module is connected between the power source and the motor, and adapted to be operated by a user to electronically cut off an electrical connection between the power source and the motor. The switch module is configured to operate independently of the motor controller and the microprocessor.

Optionally, said switch module may comprise a user switch and a switch element connected to said user switch; said switch element may be connected between said power source and said motor; said switch component may be adapted to change an electronic state of the switch element when the user operates the user switch to cut off an electrical connection between the power source and the motor.

Optionally, the switch element may be a transistor. The switching module may further contain a driving circuit, and the user switch may be connected to the switch element through the driving circuit.

In a specific embodiment, the driving circuit may be connected to the microprocessor to provide thereto a state of the switch module.

According to another aspect of the disclosure, a method of controlling a manual backup switch of a power tool is provided. The method contains the steps of: the user operating the user switch; in response to the operation, changing an electronic state of the switch element connected to the user switch; cutting off an electrical connection between the power source of the power tool and the motor in response to the change in the electronic state. The power tool contains a motor controller and a microprocessor connected to the motor. The switch element operates independently of the motor controller and the microprocessor.

Preferably, the switch element may be connected to the user switch by a driving circuit. The changing step may further contain: in response to the user operating the user switch, the driving circuit controlling the user switch to change the electronic state of the switch element.

Optionally, the switch element may be a transistor. The driving circuit may be connected to the microprocessor to provide thereto a state regarding the switch element.

The power tool provided by the disclosure has many advantages. For example, by configuring a backup manual switch, the user can reliably cut off the power supply between the power supply and the motor when the microcontroller and the motor controller of the power tool fail to operate normally due to various reasons. In this way, it can meet the requirements of various national safety regulations and ensure the safety of users using power tools.

On the other hand, since the backup manual switch provided in the disclosure is not a simple mechanical switch but uses an electronic switch module including a switch element, the power tool itself can be designed to be for the purpose of high-power without worrying about the lifespan, heat generation safety, cost, etc. that may be caused by mechanical switches.

Any feature or features described herein in relation to one aspect or embodiment of the present invention is combinable with any other feature or features described herein in relation to any other aspect or embodiment of the present invention, as appropriate and applicable.

### BRIEF DESCRIPTION OF THE DRAWINGS

The performance and advantages of the disclosure will be further understood by reference to the remainder of the specification and the accompanying drawings. In some cases, a sub tag is placed after a label and hyphen to represent one of many similar components. When referring to a label but not specifically indicating an existing sub-tag, it refers to all of these similar components.
Fig. 1 shows a schematic diagram of electrical connections between a switch module and other components in a power tool in accordance with one embodiment of the present invention.
Fig. 2 is a flow chart of a method for electronically cutting off the power of the switch module of Fig. 1.

### DETAILED DESCRIPTION OF PREFERRED EMBODIMENTS

In the embodiments of the disclosure, the electronic switches can be used to cut off the power in the form of a backup in the event of a failure of the microprocessor and motor controller. Other different benefits and advantages provided by the various embodiments of the disclosure are readily apparent from the following description.

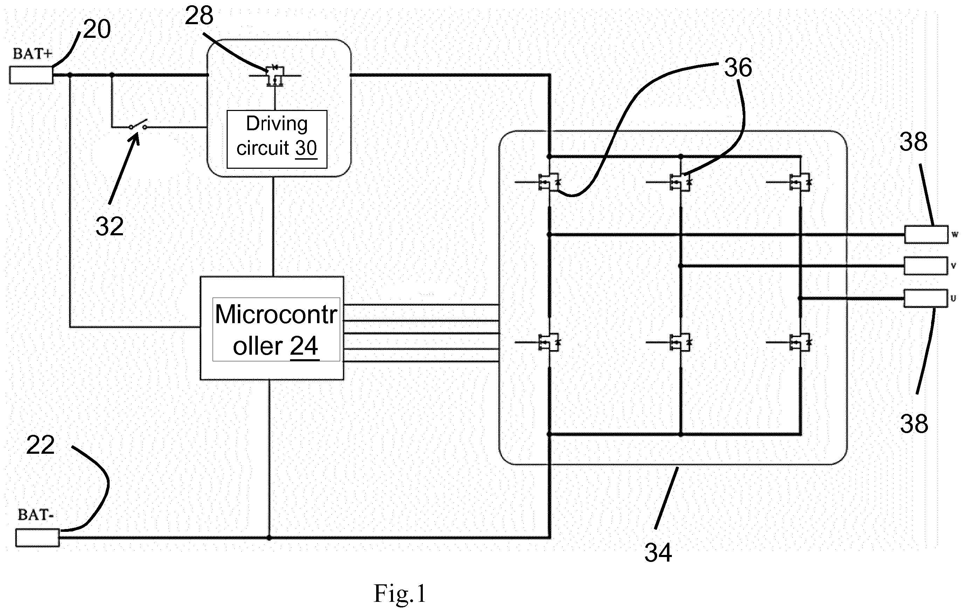

Fig. 1 shows a schematic diagram of the circuit connections inside the power tool in accordance with the first embodiment of the invention. The power tool uses a battery (not shown) such as a detachable lithium battery pack as a power source. The positive and negative outputs of the battery are BAT+20 and BAT-22, respectively. A microcontroller 24 is connected to BAT+20 and BAT-22 to obtain power from the battery. The microcontroller 24 is connected to a motor controller 34 and is configured to provide signals to the latter to control operation of the motor (not shown) in the power tool by the motor controller 34. The motor controller 34 includes six driving MOSFETs 36 which respectively correspond to three phases of the motor, and the motor controller 34 is connected to the motor through three output terminals 38. The connection between the above-mentioned microcontroller and the motor controller, and the control method related thereto, are well known to those skilled in the art, so they will not be described herein again.

A switch module is also connected between the battery input terminal BAT+20 and the motor controller 34. The switch module consists of a user switch 32, a driving circuit 30, and a switch element 28. Among them, the user switch 32 is a switch which is in direct contact with and operated by a user, such as a mechanical switch. The user switch 32 is connected to a driving circuit 30 which is in turn connected to the switch element 28. The switch element 28 is a MOSFET whose gate is connected to the driving circuit 30, and the other ends of the switch element 28, that is, the source and the drain, are connected to the BAT 20+ and the motor controller 34 respectively. The switch element 28 is capable of receiving signals from the driving circuit 30 to control the electronic state of the switch element 28. For example, as the voltage applied to the gate changes, current flow between the source and drain can be enabled or disabled. The above-mentioned switch module works electronically because it involves current/voltage control and electronic state changes of the components (such as on-off of MOSFET) rather than purely mechanically like conventional mechanical switches..

On the other hand, the driving circuit 30 is simultaneously connected to the microcontroller 24, but the driving circuit 30 is not controlled by the latter. Instead, the driving circuit 30 only provides a state about itself (and/or the switch element 28) to microcontroller 24 as a reference. Thus, the driving circuit 30 and the entire switch module are configured to operate independently of the motor controller 34 and the microprocessor 24.

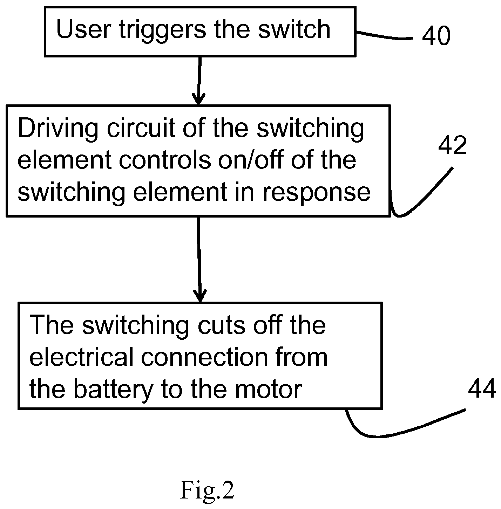

Now look at the operation of the above switch module. Reference can be made to Fig. 2. If the user finds that there is a problem with the microcontroller and/or the motor controller in the power tool so that the power of the motor can't be cut off normally, for example, when the software in the microcontroller has an error, the switch module can be used as a backup means to manually cut off the power supply to the motor. In this case, the user operates the user switch in Step 40. The signal generated by the user switch is then provided to the driving circuit. In Step 42, the driving circuit drives the switch element in response to the user switching action. As a response, the electronic state of the switch element is changed so that the main circuit, i.e., the electrical connection between the battery and the motor, is controlled and cut off. In this way, even if the software of the microprocessor itself fails under certain abnormal conditions, or the motor controller fails, the main circuit can be cut off by the user through the user switch to ensure safety. In the above steps, the state of the driving circuit can be communicated to the microprocessor. But the microprocessor does not control the driving circuit.

Having thus described several embodiments, those skilled in the art will recognize that various changes, additional structures, and equivalents may be used without departing from the spirit of the disclosure. Accordingly, the above description should not be taken as a limitation to the scope of the invention as defined by the following claims.

For example, although the components of the switch module shown in Fig. 1 are divided into three separate parts including a user switch, a driving circuit, and a switch element, in other embodiments these parts may be combined according to system design requirements (or combined into a separate switching device) or separated, and is not limited to the specific embodiments described above.

Further, the switch element used in the switch module in the above embodiment is a MOSFET. However, those skilled in the art will appreciate that other types of switch elements, such as other types of transistors, IGBTs, relays, etc., can also be used to implement the invention. Also, the configuration of such a switch element may include a single control array, a plurality of control arrays connected in parallel, a plurality of control arrays connected in series, or a plurality of control arrays that are connected in parallel first and then in series.

## Claims

1. A power tool comprising:
a power source;
a motor adapted to be powered by the power source;
a microcontroller;
a motor controller connected to the motor; the motor controller connected to and controlled by the microcontroller to control an operation of the motor; and
a switch module connected between the power source and the motor, and adapted to be operated by a user to electronically cut off an electrical connection between the power source and the motor; the switch module configured to operate independently of the motor controller and the microprocessor.

2. The power tool of claim 1, wherein said switch module further comprises a user switch and a switch element connected to said user switch; said switch element connected between said power source and said motor; said switch element adapted to change an electronic state of the switch element when the user operates the user switch to cut off the electrical connection between the power source and the motor.

3. The power tool of claim 2, wherein the switch element is a transistor; the switching module further comprising a driving circuit; and the user switch connected to the switch element through the driving circuit.

4. The power tool of claim 3, wherein the driving circuit is connected to the microprocessor to provide thereto a state of the switch module.

5. A method of controlling a manual backup switch of a power tool, comprising the steps of:
the user operating a user switch;
in response to the operation, changing an electronic state of the switch element connected to the user switch;
cutting off an electrical connection between a power source and a motor of the power tool in response to the change in the electronic state;
wherein the power tool comprises a motor controller and a microprocessor connected to the motor, the switch element operating independently of the motor controller and the microprocessor.

6. The method of claim 5, wherein said switch element is connected to said user switch by a driving circuit; said changing step further comprising: in response to said user operating said user switch, said driving circuit controlling said user switch to change the electronic state of the switch element.

7. The method of claim 5 or 6, wherein the switch element is a transistor.

8. The method of claim 6, or claim 7 when dependent on claim 6, wherein the driving circuit is connected to the microprocessor to provide thereto a state regarding the switch element.
